# EUROPEAN PATENT SPECIFICATION

(11) **EP 3 920 376 B1**
(45) Date of publication and mention of the grant of the patent: **14.10.2026**
(21) Application number: 21720673.9
(22) Date of filing: 20.01.2021
(51) Int. Cl.: H02K 1/18, H02K 24/00, H01F 38/18, H02K 11/21

(54) **RESOLVER STATOR POSITIONING PRESS SHEET AND POSITIONING STRUCTURE**
PRESSBLECH FÜR RESOLVERSTATORPOSITIONIERUNG UND UND POSITIONIERUNGSSTRUKTUR
FEUILLE DE PRESSE DE POSITIONNEMENT DE STATOR DE RÉSOLVEUR ET STRUCTURE DE POSITIONNEMENT

(30) Priority: 07.04.2020 CN 202020491701 U
(43) Date of publication of application: 08.12.2021
(73) Proprietor: Jing-Jin Electric Technologies Co., Ltd, Beijing 100016 (CN)
(72) Inventor: ZHAO, Hongyang, Beijing 100015 (CN); PEI, Zhengqiang, Beijing 100015 (CN)
(74) Representative: Röggla, Harald
(86) International application number: PCT/CN2021/072784
(87) International publication number: WO 2021/203793

(56) References cited:
- CN-A- 108 696 087
- CN-A- 109 980 881
- CN-U- 205 882 914
- CN-U- 207 602 371
- CN-U- 207 602 371
- CN-U- 208 078 745
- CN-U- 208 597 002
- CN-U- 208 597 002
- CN-U- 211 981 596
- JP-A- 2016 039 691
- JP-A- 2018 201 274
- JP-A- 2019 140 871
- JP-B2- 5 728 704

## Description

### TECHNICAL FIELD

The present disclosure relates to the technical field of electric-motor inspection, and particularly relates to a positioning presser and a positioning structure for a resolver stator.

### BACKGROUND

A revolver is one of electromagnetic sensors, is also referred to as a synchronous decomposer, and is a miniaturized alternating-current motor for measuring angles. A revolver is formed by a stator and a rotor, wherein generally the stator is fixed to the electric-motor end cover, and the rotor is fixed to the rotation shaft of the electric motor and rotates synchronously with the rotation shaft of the electric motor.

Currently, revolvers are used in the permanent-magnet synchronous motors of new-energy vehicles, for positioning the relative positions of the rotor magnetic poles and the phase windings of the stator. However, if the stator of the revolver cannot be effectively fixed or deviates due to vibration in the travelling of the car, that might cause erroneous feedback of the position of the rotor, thereby causing potential safety hazards such as vehicle out of control. Furthermore, conventional modes of fixing the resolver stator cannot ensure that the resolver stator of each of electric motors is in the same position, which results in that the zero-phase error between the electric motors is large, and the adjusting process is tedious.

Document JP 5 728704 B2, according to its abstract, discloses a case accommodating the motor, having a first centering portion capable of aligning the resolver stator to support the outer periphery of the resolver, and a fixing member for fixing the resolver stator to the case so as to be able to rotate integrally around the rotary shaft of the resolver stator and the motor and rotate around the rotary shaft with respect to the case, and is attached to the case through a bolt as a fastening member.

### SUMMARY

Aiming at the above problems in the prior art, the present disclosure provides a positioning presser and a positioning structure for a resolver stator that can solve or at least partially solve the above technical problems.

In order to achieve the above object, the technical solutions of the present disclosure are realized as follows:

An aspect of the present disclosure provides a positioning presser for a resolver stator, wherein the positioning presser is entirely of a round-ring shape, a main body of the positioning presser is provided with a stator pressing slot hole and a presser mounting slot hole, a positioning protrusion or groove is provided on an inner side of the positioning presser, and the positioning protrusion or groove matches with a groove or protrusion on the resolver stator, to position the resolver stator.

Furthermore, the stator pressing slot hole is a plurality of stator pressing slot holes, and the presser mounting slot hole is a plurality of presser mounting slot holes.

Furthermore, center lines of a plurality of the stator pressing slot holes are on a same circumferential line, center lines of a plurality of the presser mounting slot holes are on a same circumferential line, and a diameter of the circumferential line of the stator pressing slot holes is less than a diameter of the circumferential line of the presser mounting slot holes.

Optionally, a resolver-stator pressing bolt or screw is provided on the stator pressing slot hole, a presser-mounting-slot-hole screw or bolt is provided on the presser mounting slot hole, and a diameter or inscribed circle of a nut of the resolver-stator pressing bolt or screw is greater than a diameter or inscribed circle of a nut of the presser-mounting-slot-hole screw or bolt.

Optionally, a cross section of the positioning protrusion or groove has any one of a rectangular shape, a triangular shape and a semicircular shape.

Optionally, the positioning presser is formed by stamping.

Optionally, the positioning presser is made from a carbon steel having a plasticity.

Optionally, the positioning presser is provided with a notch for accommodating a cable.

Another aspect of the present disclosure provides a positioning structure for a resolver stator, wherein the positioning structure comprises a resolver stator and an electric-motor end cover, the positioning structure further comprises the positioning presser of any one of the above items, the resolver stator is adjustably fixed to the electric-motor end cover via the positioning protrusion or groove of the positioning presser, and the resolver stator is provided with a groove or protrusion.

Optionally, a resolver-stator pressing bolt or screw is provided on the stator pressing slot hole, a presser-mounting-slot-hole screw or bolt is provided on the presser mounting slot hole, the resolver-stator pressing bolt or screw is for pressing the resolver stator on the electric-motor end cover, and the presser-mounting-slot-hole screw or bolt is for mounting and fixing the positioning presser to the electric-motor end cover.

The above technical solutions of the present disclosure can obtain the following advantageous effects:

The present disclosure can effectively reduce the difficulty in assembling, which increases the efficiency in assembling, and facilitates to reduce the defective percentage. In the mass production of the electric motor, the electrical-angle zero points of the electric motors can be made the same, which improves the uniformity of the assembling quality of electric motors of the same model.

### BRIEF DESCRIPTION OF THE DRAWINGS

Fig. 1 is a schematic structural diagram of the installation of the resolver stator according to an embodiment of the present disclosure; and
Fig. 2 is a schematic structural diagram of the positioning presser for a resolver stator according to an embodiment of the present disclosure.

In the drawings: 1. resolver-stator pressing bolt or screw; 2. presser-mounting-slot-hole screw or bolt; 3. positioning presser for a resolver stator; 4. resolver stator; 5. electric-motor end cover; 31. positioning protrusion; 32. stator pressing slot hole; and 33. presser mounting slot hole.

### DETAILED DESCRIPTION

In order to make the objects, the technical solutions and the advantages of the present disclosure clearer, the technical solutions of the present disclosure will be clearly and completely described below with reference to the particular embodiments and the corresponding drawings of the present disclosure. Apparently, the described embodiments are merely certain embodiments of the present disclosure, rather than all of the embodiments. All of the other embodiments that a person skilled in the art can obtain on the basis of the embodiments in the present disclosure without paying creative work will fall within the protection scope of the present disclosure that is solely defined by the appended claims. In the following description, although some features may be presented as optional if said features are part of claim 1 they are considered as being part of the invention.

### The first embodiment

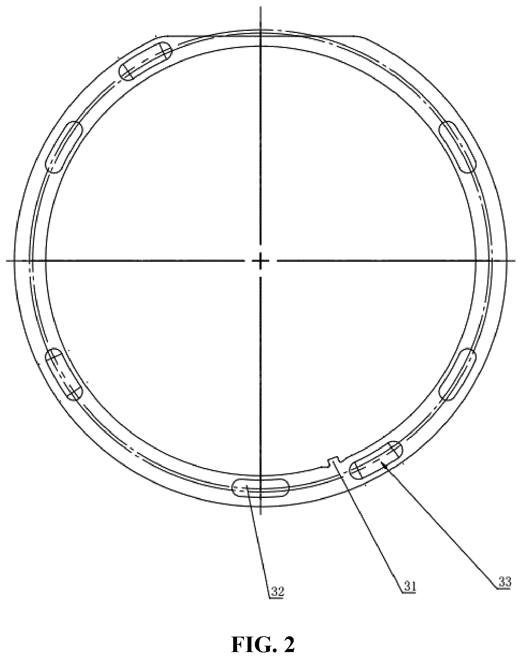

As shown in Fig. 2, the first embodiment of the present disclosure discloses a positioning presser for a resolver stator. The positioning presser 3 is entirely of a round-ring shape. The main body of the positioning presser 3 is provided with a stator pressing slot hole 32 and a presser mounting slot hole 33. The stator pressing slot hole 32 and presser mounting slot hole 33 can realize the fixing of the positioning presser 3 and the resolver stator 4 to the electric-motor end cover 5. The slot holes facilitate the adjustment on positions during the fixing. Bolts or screws are provided in the slot holes, to realize the pressing or installation positioning of the resolver stator or the positioning presser.

A positioning protrusion 31 or groove is provided on the inner side of the positioning presser 3. The positioning protrusion 31 or groove matches with a groove or protrusion on the resolver stator 4, to position the resolver stator 4, during which the position of the resolver stator is changed by the rotary adjustment on the positioning presser 3.

The positioning presser 3 according to the present embodiment has a low difficulty in assembling, which can effectively increase the efficiency in assembling. The positioning presser 3 has a simple structure, which facilitates the production and facilitates to reduce the defective percentage. By positioning and installing by using the positioning presser 3 according to the present embodiment, it can be ensured that the resolver stator 4 of each of electric motors is in the same position, which effectively reduces the zero-phase error between the electric motors.

Optionally, the stator pressing slot hole 32 is a plurality of stator pressing slot holes, preferably 5, and the presser mounting slot hole 33 is a plurality of presser mounting slot holes, preferably 2. The stator pressing slot holes 32 and the presser mounting slot holes 33 are axially symmetric respectively, which enables the positioning presser 3 and the resolver stator 4 to bear force uniformly, to facilitate the installation and the fixing.

In a preferable embodiment, as can be seen from Fig. 2, the center lines of the plurality of stator pressing slot holes 32 are on the same circumferential line, and the center lines of the plurality of presser mounting slot holes 33 are on the same circumferential line, which facilitates the evenness of the borne forces. The diameter of the circumferential line of the stator pressing slot holes 32 is less than the diameter of the circumferential line of the presser mounting slot holes 33.

In an embodiment, a resolver-stator pressing bolt or screw 1 is provided in the stator pressing slot hole 32, a presser-mounting-slot-hole screw or bolt 2 is provided in the presser mounting slot hole 33, and the diameter or inscribed circle of the nut of the resolver-stator pressing bolt or screw 1 is greater than the diameter or inscribed circle of the nut of the presser-mounting-slot-hole screw or bolt 2, which facilitates to firmly fix the resolver stator 4.

In a preferable embodiment, the cross section of the positioning protrusion 31 or groove has any one of a rectangular shape, a triangular shape and a semicircular shape. Certainly, the cross section of the positioning protrusion 31 or groove may also be of another shape that can serve to fix, such as a square-shape or a trapezoidal shape.

In an embodiment, the positioning presser 3 is formed by stamping. The positioning presser 3 may also be formed by cutting, or formed by another mode.

Preferably, the positioning presser 3 is made from a carbon steel having a plasticity, or another metal material having a plasticity.

In an embodiment, the positioning presser 3 is provided with a notch for accommodating a cable. The cable may pass through the notch, which facilitates wiring in the installation process of the revolver.

In conclusion, the present disclosure discloses a positioning presser for a resolver stator, wherein the positioning presser is entirely of a round-ring shape, a main body of the positioning presser is provided with a stator pressing slot hole and a presser mounting slot hole, a positioning protrusion or groove is provided on an inner side of the positioning presser, and the positioning protrusion or groove matches with a groove or protrusion on the resolver stator, to position the resolver stator. The positioning presser according to the present disclosure can effectively reduce the difficulty in assembling of the revolver stator, which increases the efficiency in assembling, and reduces the defective percentage of the product.

### The second embodiment

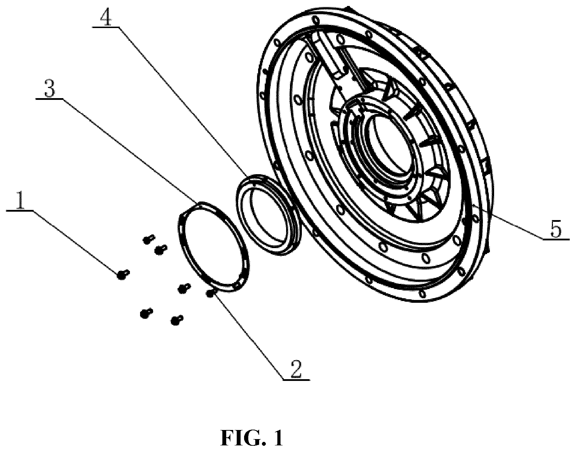

The second embodiment of the present disclosure discloses a positioning structure for a resolver stator. As shown in Fig. 1, the positioning structure comprises a resolver stator 4 and an electric-motor end cover 5. The positioning structure further comprises the positioning presser 3 of any one of the above items. The resolver stator 4 is adjustably fixed to the electric-motor end cover 5 via the positioning protrusion 31 or groove of the positioning presser 3. The resolver stator 4 is provided with a groove or protrusion. The positioning protrusion 31 or groove on the positioning presser 3 matches with the groove or protrusion on the resolver stator 4, which facilitates the positioning and fixing between the positioning presser 3 and the resolver stator 4.

By using the positioning structure according to the present embodiment, in the mass production of the electric motor, the electrical-angle zero points of the electric motors can be made the same, which improves the uniformity of the assembling quality of electric motors of the same model.

In an embodiment, a resolver-stator pressing bolt or screw 1 is provided in the stator pressing slot hole 32, a presser-mounting-slot-hole screw or bolt 2 is provided in the presser mounting slot hole 33, the resolver-stator pressing bolt or screw 1 is for pressing the resolver stator 4 on the electric-motor end cover 5, and the presser-mounting-slot-hole screw or bolt 2 is for mounting and fixing the positioning presser 3 to the electric-motor end cover 5.

The above are merely particular embodiments of the present disclosure. By the teaching of the present disclosure, a person skilled in the art can make other modifications or variations on the basis of the above embodiments. A person skilled in the art should understand that the above particular descriptions are merely for the purpose of better interpreting the present disclosure, and the protection scope of the present disclosure should be subject to the protection scope of the claims.

## Claims

1. A positioning presser for a resolver stator (3), the positioning presser is entirely of a round-ring shape, a main body of the positioning presser is provided with a stator pressing slot hole (32) and a presser mounting slot hole (33), a positioning protrusion (31) or groove is provided on an inner side of the positioning presser, and the positioning protrusion (31) or groove matches with a groove or protrusion on the resolver stator (4), to position the resolver stator (4), wherein:
the stator pressing slot hole (32) is a plurality of stator pressing slot holes (32), and the presser mounting slot hole (33) is a plurality of presser mounting slot holes (33),
center lines of the plurality of stator pressing slot holes (32) are on a same circumferential line, center lines of the plurality of presser mounting slot holes (33) are on a same circumferential line, and a diameter of the circumferential line of the stator pressing slot holes (32) is less than a diameter of the circumferential line of the presser mounting slot holes (33).

2. The positioning presser according to claim 1, **characterized in that**: a resolver-stator pressing bolt or screw (1) is provided in the stator pressing slot hole (32), a presser-mounting-slot-hole screw or bolt (2) is provided in the presser mounting slot hole (33), and a diameter or inscribed circle of a nut of the resolver-stator pressing bolt or screw (1) is greater than a diameter or inscribed circle of a nut of the presser-mounting-slot-hole screw or bolt (2).

3. The positioning presser according to claim 1, **characterized in that**: a cross section of the positioning protrusion (31) or groove has any one of a rectangular shape, a triangular shape and a semicircular shape.

4. The positioning presser according to claim 1, **characterized in that**: the positioning presser is formed by stamping.

5. The positioning presser according to claim 1, **characterized in that**: the positioning presser is made from a carbon steel having a plasticity.

6. The positioning presser according to claim 1, **characterized in that**: the positioning presser is provided with a notch for accommodating a cable.

7. A positioning structure for a resolver stator (3), **characterized in that**: the positioning structure comprises a resolver stator (4) and an electric-motor end cover (5), the positioning structure further comprises the positioning presser according to any one of claims 1 to 6, the resolver stator (4) is adjustably fixed to the electric-motor end cover (5) via the positioning protrusion (31) or groove of the positioning presser, and the resolver stator (4) is provided with a groove or protrusion.

8. The positioning structure according to claim 7, **characterized in that**: a resolver-stator pressing bolt or screw (1) is provided in the stator pressing slot hole (32), a presser-mounting-slot-hole screw or bolt (2) is provided in the presser mounting slot hole (33), the resolver-stator pressing bolt or screw (1) is for pressing the resolver stator (4) on the electric-motor end cover (5), and the presser-mounting-slot-hole screw or bolt (2) is for mounting and fixing the positioning presser to the electric-motor end cover (5).

## Patentansprüche

1. Ein Positionieranpresselement für einen Resolver-Stator (3), wobei das Positionieranpresselement vollständig rundringförmig ausgebildet ist; ein Hauptkörper des Positionieranpresselements mit einem Stator-Anpress-Langloch (32) und einem Befestigungslangloch für das Anpresselement (33) versehen ist; eine Innenseite des Positionieranpresselements mit einem Positioniervorsprung (31) oder einer Positioniernut versehen ist, und der Positioniervorsprung (31) oder die Positioniernut zu einer Nut oder einem Vorsprung am Resolver-Stator (4) passt, um den Resolver-Stator (4) zu positionieren,
wobei:
das Stator-Anpress-Langloch (32) mehrere Stator-Anpress-Langlöcher (32) umfasst und das Befestigungslangloch für das Anpresselement (33) mehrere Befestigungslanglöcher für das Anpresselement (33) umfasst,
die Mittellinien der mehreren Stator-Anpress-Langlöcher (32) auf einer gemeinsamen Umfangslinie liegen, die Mittellinien der mehreren Befestigungslanglöchern für das Anpresselement (33) auf einer gemeinsamen Umfangslinie liegen und der Durchmesser der Umfangslinie der Stator-Anpress-Langlöcher (32) kleiner ist als der Durchmesser der Umfangslinie der Befestigungslanglöcher für das Anpresselement (33).

2. Das Positionieranpresselement nach Anspruch 1, **dadurch gekennzeichnet, dass**: eine Resolver-Stator-Anpressschraube oder ein -bolzen (1) im Stator-Anpress-Langloch (32) vorgesehen ist, eine Anpress-Befestigungslangloch-Schraube oder ein -bolzen (2) im Befestigungslangloch für das Anpresselement (33) vorgesehen ist, und der Durchmesser oder der Inkreis einer Mutter der Resolver-Stator-Anpressschraube oder des -bolzens (1) größer ist als der Durchmesser oder der Inkreis einer Mutter der Anpress-Befestigungslangloch-Schraube oder des - bolzens (2).

3. Positionieranpresselement nach Anspruch 1, **dadurch gekennzeichnet, dass**: ein Querschnitt des Positioniervorsprungs (31) oder der Nut eine rechteckige Form, eine dreieckige Form oder eine halbkreisförmige Form aufweist.

4. Positionieranpresselement nach Anspruch 1, **dadurch gekennzeichnet, dass**: das Positionieranpresselement durch Stanzen hergestellt ist.

5. Positionieranpresselement nach Anspruch 1, **dadurch gekennzeichnet, dass**: die Positionieranpresselement aus einem Kohlenstoffstahl hergestellt ist, der Plastizität aufweist.

6. Die Positionieranpresselement nach Anspruch 1, **dadurch gekennzeichnet, dass**: die Positionieranpresselement mit einer Aussparung zur Aufnahme eines Kabels versehen ist.

7. Positionierungsstruktur für einen Resolver-Stator (3), **dadurch gekennzeichnet, dass**: die Positionierungsstruktur einen Resolver-Stator (4) und eine Endabdeckung (5) eines Elektromotors umfasst, die Positionierungsstruktur ferner das Positionieranpresselement gemäß einem der Ansprüche 1 bis 6 umfasst, der Resolver-Stator (4) über den Positioniervorsprung (31) oder die Nut des Positionieranpresselements einstellbar an der Endabdeckung (5) des Elektromotors befestigt ist und der Resolver-Stator (4) mit einer Nut oder einem Vorsprung versehen ist.

8. Die Positionierungsstruktur nach Anspruch 7, **dadurch gekennzeichnet, dass**: eine Resolver-Stator-Anpressschraube oder ein -bolzen (1) im Stator-Anpress-Langloch (32) vorgesehen ist, eine Anpress-Befestigungs-Langlochschraube oder ein -bolzen (2) im Befestigungslangloch für das Anpresselement (33) vorgesehen ist, die Resolver-Stator-Anpressschraube oder der -bolzen (1) dazu dient, den Resolver-Stator (4) an die Endabdeckung (5) des Elektromotors anzudrücken, und die Anpress-Befestigungs-Langlochschraube oder der - bolzen (2) dazu dient, das Positionieranpresselement an der Endabdeckung (5) des Elektromotors zu befestigen und zu fixieren.

## Revendications

1. Presseur de positionnement pour un stator de résolveur (3), le presseur de positionnement étant entièrement de forme annulaire ronde, un corps principal du presseur de positionnement étant muni d'un trou oblong de pression du stator (32) et d'un trou oblong de montage du presseur (33), une protubérance (31) ou une rainure de positionnement étant prévue sur un côté intérieur du presseur de positionnement, et la protubérance (31) ou la rainure de positionnement correspondant à une rainure ou à une protubérance sur le stator de résolveur (4), afin de positionner le stator de résolveur (4),
dans lequel:
le trou oblong de pression du stator (32) consiste en une pluralité de trous oblongs de pression du stator (32), et le trou oblong de montage du presseur (33) consiste en une pluralité de trous oblongs de montage du presseur (33),
les lignes médianes de la pluralité de trous oblongs de pression du stator (32) se trouvent sur une même ligne circonférentielle, les lignes médianes de la pluralité de trous oblongs de montage du presseur (33) se trouvent sur une même ligne circonférentielle, et un diamètre de la ligne circonférentielle des trous oblongs de pression du stator (32) est inférieur au diamètre de la ligne circonférentielle des trous oblongs de montage du presseur (33).

2. Presseur de positionnement selon la revendication 1, **caractérisé en ce que**: un boulon ou une vis de pression du stator de résolveur (1) est prévu dans le trou oblong de pression du stator (32), une vis ou un boulon du trou oblong de montage du presseur (2) est prévu dans le trou oblong de montage du presseur (33), et un diamètre ou un cercle inscrit d'un écrou du boulon ou de la vis de pression du stator de résolveur (1) est supérieur au diamètre ou au cercle inscrit d'un écrou de la vis ou du boulon du trou oblong de montage du presseur (2).

3. Presseur de positionnement selon la revendication 1, **caractérisé en ce que**: une section transversale de la protubérance (31) ou de la rainure de positionnement présente l'une des formes suivantes: une forme rectangulaire, une forme triangulaire et une forme semi-circulaire.

4. Presseur de positionnement selon la revendication 1, **caractérisé en ce que**: le presseur de positionnement est formé par estampage.

5. Presseur de positionnement selon la revendication 1, **caractérisé en ce que**: le presseur de positionnement est fabriqué à partir d'un acier au carbone ayant une plasticité.

6. Presseur de positionnement selon la revendication 1, **caractérisé en ce que**: le presseur de positionnement est muni d'une encoche pour recevoir un câble.

7. Structure de positionnement pour un stator de résolveur (3), **caractérisé en ce que**: la structure de positionnement comprend un stator de résolveur (4) et un couvercle d'extrémité de moteur électrique (5), la structure de positionnement comprend en outre le presseur de positionnement selon l'une quelconque des revendications 1 à 6, le stator de résolveur (4) est fixé de manière réglable au couvercle d'extrémité de moteur électrique (5) par l'intermédiaire de la protubérance (31) ou de la rainure de positionnement du presseur de positionnement, et le stator de résolveur (4) est muni d'une rainure ou d'une protubérance.

8. Structure de positionnement selon la revendication 7, **caractérisée en ce que**: un boulon ou une vis de pression du stator de résolveur (1) est prévu dans le trou oblong de pression du stator (32), une vis ou un boulon du trou oblong de montage du presseur (2) est prévu dans le trou oblong de montage du presseur (33), le boulon ou la vis de pression du stator de résolveur (1) sert à presser le stator de résolveur (4) sur le couvercle d'extrémité de moteur électrique (5), et la vis ou le boulon du trou oblong de montage du presseur (2) sert à monter et à fixer le presseur de positionnement au couvercle d'extrémité de moteur électrique (5).
